# EUROPÄISCHE PATENTANMELDUNG

(11) **EP 1 167 125 A2**
(43) Veröffentlichungstag der Anmeldung: **02.01.2002**
(21) Anmeldenummer: 01110534.3
(22) Anmeldetag: 28.04.2001
(51) Int. Cl.: B60R 19/00

(54) **Vorrichtung zur Zwangsführung eines Motor-und/oder Getriebeaggregats bei einem Crashfall**

(30) Priorität: 27.06.2000 DE 10031165
(71) Anmelder: Dr.Ing. h.c.F. Porsche Aktiengesellschaft, 70435 Stuttgart (DE)
(72) Erfinder: Hawener, Rainer, 75233 Tiefenbronn (DE); Rugies, Stefan, 85120 Hepberg (DE)

(57) **Zusammenfassung**

Zur Zwangsführung des Getriebegehäuses bei einem Crashfall wird an der Unterseite des Getriebegehäuses (5) eine Crashkufe (6) vorgesehen, die eine Schrägfläche aufweist, welche einem Querträger (3) zugerichtet ist, so daß bei einer Verlagerung des Getriebegehäuses bzw. des Aggregats entgegen der Fahrtrichtung die Schrägfläche eine Zwangsführung des Aggregats schräg nach oben über den Querträger einleitet.

## Beschreibung

Die Erfindung bezieht sich auf eine Vorrichtung zur Zwangsführung eines Motor-und/oder Getriebeaggregats bei einem Crash nach dem Oberbegriff des Anspruchs 1.

Aus der DE 42 30 722 A1 ist ein Kraftfahrzeug-Vorderwagen mit einem Antriebsaggregat und einem bereichsweise hinter ihm angeordneten steifen Hilfsrahmen bekannt. Am Hilfsrahmen ist eine schräg nach hinten weisende Gleitfläche und am Aggregat eine am Gehäuse ausgebildete korrespondierende Gegengleitfläche derart vorgesehen, daß bei einem Crash des Aggregat nach unten zur Radaufstandsfläche abgelenkt wird.

Aufgabe der Erfindung ist es, eine Vorrichtung für ein Motor- und/oder Getriebeaggregat zu schaffen, das bei einem Crash in seiner Bewegungsrichtung entgegen der Fahrtrichtung zwangsgeführt verschiebbar ist und die Vorrichtung aus einem einfach auszuwechselnden und montierbaren Teil besteht.

Diese Aufgabe wird erfindungsgemäß durch die Merkmale des Anspruchs 1 gelöst, Weitere vorteilhafte Merkmale beinhalten die Unteransprüche.

Die mit der Erfindung hauptsächlich erzielten Vorteile bestehen darin, daß bei einem Crashfall das Antriebsaggregat ohne wesentliche Behinderung sich entgegen der Fahrtrichtung verschieben kann und Beschädigungen von Anbauteilen und vom Getriebegehäuse weitestgehend verhindert werden. Dies wird erreicht, indem das Führungsmittel aus einer mit dem Getriebegehäuse verbundenen Crashkufe besteht, die eine entgegen der Fahrtrichtung unter einem Winkel angestellte schräge Gleitfläche aufweist. Diese schräge Gleitfläche ist einer Lageraufnahme im Querträger zugerichtet in der das elastische Lager bei einer Crashposition bei an der Lageraufnahme auflaufender Gleitfläche abscherbar ist. Das Getriebelager in der Lageraufnahme des Querträgers ist über einen herausragenden Lagerkern mittels einer Konsole am Getriebegehäuse befestigt. Der Lagerkern kann im Crashfall der Crashbewegung des Getriebegehäuses folgen und hierbei aus den elastischen Elementen des Getriebelagers ausreißen, so daß die freie Bewegung des Aggregats möglich wird.

Durch die Kopplung der Wirkungen der Crashkufe in Verbindung mit dem Ausreißen des elastischen Lagerelements des Getriebelagers kann sich das Aggregat über den Querträger hinaus nach hinten entgegen der Fahrtrichtung verschieben. Der Lagerkern ist hierzu aus der Lageraufnahme herausgeführt und kann im Crashfall wegschwenken und somit ausreißen.

Die Crashkufe ist hierzu etwa Z-förmig ausgeführt und mit einem oberen ersten abgewinkelten Ende am Getriebegehäuse befestigt, wobei die schräg verlaufende Gleitfläche mit ihrem unteren etwa horizontal verlaufenden zweiten Ende freiliegend zum Getriebegehäuse angeordnet ist. Zumindest die Gleitfläche und das untere Ende der Crashkufe weisen an jeder Seite nach außen vorstehende Führungen auf, die der über den Querträger vorragenden Lageraufnahme zugerichtet sind und in einer Crashposition auf der ausgerundeten Lageraufnahme gleiten können. Durch diese nach außen vorstehenden Führungen erfolgt auf den ausgerundeten Lageraufnahmen eine Führung in Fahrzeuglängsrichtung.

Durch die beabstandet zum Getriebegehäuse angeordnete Crashkufe wird ein harter Aufprall vermieden und eine federnde Anlage an der Lageraufnahme bzw. am Querträger im Crashfall erzielt.

Die zwischen den Führungen vorgeformten eingeformten Versteifungsrippen erstrecken sich in Längsrichtung und ergeben eine Versteifung der Crashkufe.

Ein Ausführungsbeispiel der Erfindung ist in den Zeichnungen dargestellt und wird im Folgenden näher beschrieben.

Es zeigen:

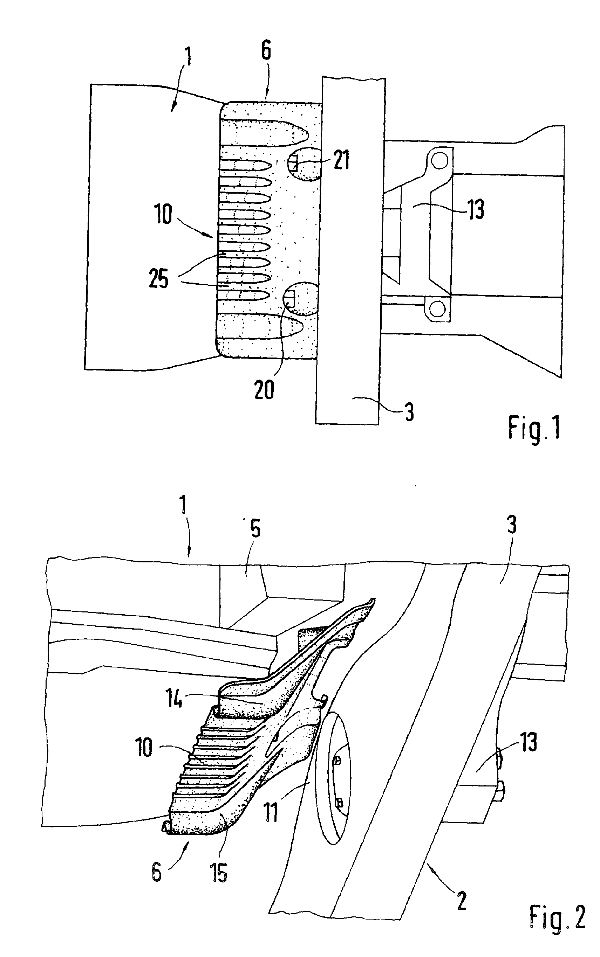

- Fig. 1: eine Ansicht auf eine Crashkufe von unten her gesehen,
- Fig. 2: eine schaubildliche Darstellung auf die Crashkufe schräg von unten her gesehen,

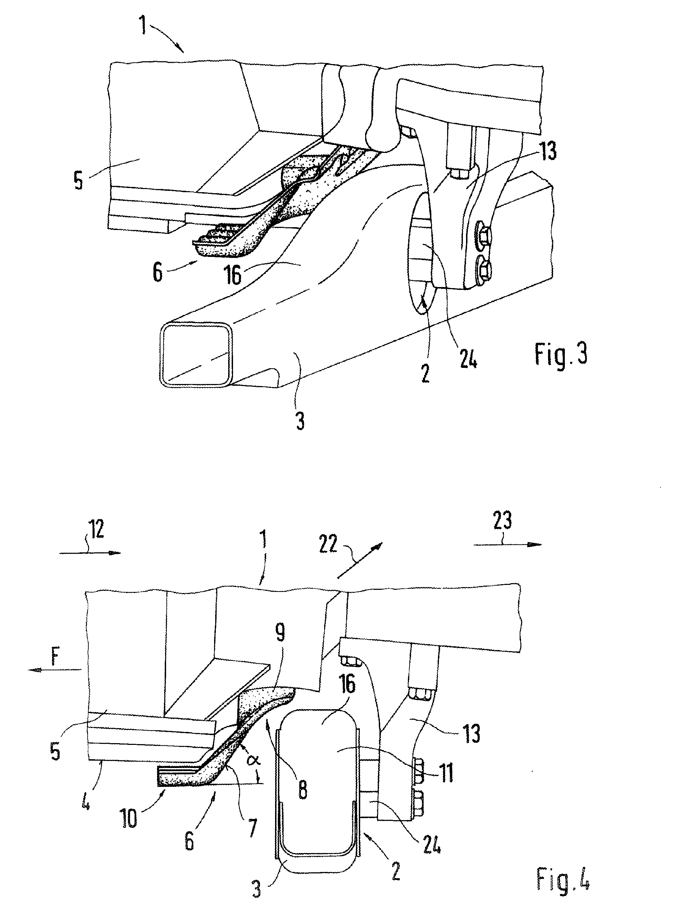

- Fig. 3: eine schaubildliche Darstellung auf die Crashkufe mit Querträger und
- Fig. 4: eine Seitenansicht der Crashkufe mit Querträger und Getriebelager.

In einem Kraftfahrzeug ist vornliegend ein Antriebsaggregat zumindest bestehend aus einer Brennkraftmaschine und einem Getriebe 1 vorgesehen, das über mindestens ein Getriebelager 2 auf einen Querträger 3 des Fahrzeugaufbaus abgestützt ist. Weitere Lager für die Brennkraftmaschine sind vornliegend aufbauseitig angeordnet.

An der Unterseite 4 des Getriebegehäuses 5 ist im Bereich einer Absetzung eine sogenannte Crashkufe 6 angeordnet. Diese besteht aus einem Z-förmigen Blech- oder Gußteil mit einer entgegen der Fahrtrichtung F unter einem Winkel α angestellten Schrägfläche 7. An diese schließt sich ein oberes abgewinkeltes erstes Ende 8 mit Befestigungsnocken 9 und ein unteres abgewinkeltes zweites Ende 10 an, welches etwa in einer horizontalen Ebene liegt.

Die Schrägfläche 7 der Crashkufe 6 ist einer Lageraufnahme 11 im Querträger 3 derart zugerichtet, daß bei einem Crash und einer damit verbundenen Bewegung des Aggregats in Pfeilrichtung 12 die Schrägfläche gegen die Lageraufnahme 11 stößt und das Aggregat sich über die an der Lageraufnahme 11 abstützende Schrägfläche 7 zwangsgeführt schräg nach oben in Pfeilrichtung 22 verschiebt. Durch diese Verschiebung des Aggregats 5 wird das Getriebelager 2 zum Ausreißen gezwungen, was durch die Verlagerung des in elastischen Elementen gehaltenen Lagerkerns 24 erfolgt, der über eine Konsole 13 mit dem Getriebegehäuse 5 verbunden ist. Hierdurch wird die Bewegung des Aggregats bei einem Crashfall nicht behindert.

In der Schrägfläche 7 und in dem unteren abgewinkelten Ende 10 der Crashkufe 6 sind an jeder Seite nach außen vorstehende Längsführungen 14, 15 vorgesehen. Diese legen sich bei einer Verlagerung des Aggregats 5 zuerst an die vorstehende Außenwandung 16 der Lageraufnahme 11 an und führen das Antriebsaggregat in seiner Verschiebebewegung.

Das untere Ende 10 der Crashkufe 6 weist in Längsrichtung verlaufende eingeformte Verstärkungsrippen 25 auf, die eine Längssteifigkeit bewirken sollen und eine gewisse Nachgiebigkeit in Querrichtung herstellen.

Die Crashkufe 6 ist zumindest am oberen Ende 8 über zwei Befestigungsschrauben 20, 21 mit dem Getriebegehäuse 5 verbunden, wobei die Schrägfläche 16 und das untere Ende 10 mit Abstand zum Getriebegehäuse 5 angeordnet sind.

Bei einem Crashfall wird sich das Aggregat 5 entgegen der Fahrtrichtung F zuerst in Pfeilrichtung 12 bewegen. Die Schrägfläche 7 der Crashkufe 6 legt sich dann an die vorstehende Fläche 16 der Getriebeaufnahme 11 an und gleitet danach durch die Schrägfläche 16 in Pfeilrichtung 22 annähernd schräg nach oben über den Querträger 3 hinweg wobei sich die Crashkufe 6 an das Getriebegehäuse 5 anlegt. Nach Erreichen des hinteren Endes 10 der Crashkufe 6 wird eine etwa horizontale Bewegung des Aggregats in Pfeilrichtung 23 eingeleitet. Während des Bewegungsvorgangs des Aggregats 5 reißt der Lagerkern 24 von seinen elastischen Lagerelementen des Getriebelagers 2 ab, so daß die Aggregatbewegung nicht mehr behindert wird.

## Patentansprüche

1. Vorrichtung zur Zwangsführung eines Motor- und/oder Getriebeaggregats bei einem Crash über ein Führungsmittel am Getriebegehäuse, das mittels mindestens eines elastischen Lagers an einem Querträger gehalten ist, **dadurch gekennzeichnet, daß** das Führungsmittel aus einer mit dem Getriebegehäuse (5) verbundenen Crashkufe (6) besteht, die eine entgegen der Fahrtrichtung (F) unter einem Winkel (α) angestellte schräge Gleitfläche (7) aufweist und einer Lageraufnahme (11) im Querträger (3) zugerichtet ist, in welcher bei Crashposition das elastische Lager (2) bei auflaufender Gleitfläche (7) an der Lageraufnahme (11) abscherbar ist.

2. Vorrichtung nach Anspruch 1, **dadurch gekennzeichnet, daß** die Crashkufe (6) etwa Z-förmig ausgeführt ist und mit einem oberen ersten abgewinkelten Ende (8) am Getriebegehäuse (5) befestigbar ist, wobei die schräg verlaufende Gleitfläche (7) mit ihrem unteren etwa horizontal verlaufenden zweiten Ende (10) freiliegend zum Getriebegehäuse (5) verläuft.

3. Vorrichtung nach den Ansprüchen 1 oder 2, **dadurch gekennzeichnet, daß** zumindest die Gleitfläche (16) und das untere Ende (10) der Crashkufe (6) an jeder Seite nach außen vorstehende und der Lageraufnahme (11) zugerichtete Längsführung (14, 15) aufweist, die in der Crashposition auf einer ausgerundeten Fläche der Lageraufnahme (11) gleiten.

4. Vorrichtung nach den Ansprüchen 1, 2 oder 3, **dadurch gekennzeichnet, daß** zwischen den Längsführungen (14, 15) zumindest im unteren Abschnitt (10) der Crashkufe ausgeformte Versteifungsrippen (25) angeordnet sind.

5. Vorrichtung nach Anspruch 1 oder einem der vorhergehenden Ansprüche, **dadurch gekennzeichnet, daß** das Getriebelager (2) in der Lageraufnahme (11) des Querträgers (3) über einen herausragenden Lagerkern (24) mit am Getriebegehäuse (5) befestigter Konsole (13) verbunden ist und der Lagerkern (24) im Crashfall der Bewegung des Aggregats in Pfeilrichtungen (12, 22, 23) des Getriebegehäuses (5) folgt und aus elastischen Elementen des Getriebelagers (2) ausreißbar ist.
